Europäisches Patentamt

(19) **European Patent Office**

**Office européen des brevets**

(11) Numéro de publication : **0 002 150**
**B1**

(12) **FASCICULE DE BREVET EUROPÉEN**

(45) Date de publication du fascicule du brevet :
15.04.81

(51) Int. Cl.³ : **F 16 D 55/22**

(21) Numéro de dépôt : **78400169.5**

(22) Date de dépôt : **09.11.78**

(54) **Frein à disque et clavette de guidage pour un tel frein.**

(30) Priorité : **17.11.77 FR 7734537**

(43) Date de publication de la demande :
**30.05.79 (Bulletin 79/11)**

(45) Mention de la délivrance du brevet :
**15.04.81 Bulletin 81/15**

(84) Etats contractants désignés :
**DE GB SE**

(56) Documents cités :
**FR - A - 2 288 911**
**FR - A - 2 343 929**

(73) Titulaire : **SOCIETE ANONYME D.B.A.**
**98 boulevard Victor Hugo**
**F-92115 Clichy (FR)**

(72) Inventeur : **Gerard, Jean-Louis**
**129 Boulevard Masséna**
**F-75013 Paris (FR)**

(74) Mandataire : **Brullé, Jean et al**
**Service Brevets Bendix 44, rue François 1er**
**F-75008 Paris (FR)**

Imprimerie Jouve, 17, rue du Louvre, 75001 Paris, France

Frein à disque et clavette de guidage pour un tel frein

L'invention se rapporte à un frein à disque susceptible d'équiper un véhicule automobile, ainsi qu'à une clavette de guidage pour un tel frein.

On connaît de nombreux types de frein à disque qui sont généralement classés en deux grandes catégories appelées respectivement frein à disque à étrier fixe et frein à disque à étrier coulissant. Les freins à disque à étrier fixe sont des freins à disque dans lesquels un organe support fixe est muni de moyens de commande opposés sollicitant deux organes de friction contre les faces respectives d'un disque tournant. Au contraire, les freins à disque à étrier coulissant sont des freins dans lesquels un étrier ou un cadre est monté coulissant par rapport à une partie fixe du véhicule et comporte des moyens de commande disposés d'un seul côté du disque, de telle sorte que ces moyens de commande sollicitent directement l'un des organes de friction contre la face correspondante du disque et, par réaction au travers de l'étrier, l'autre organe de friction contre la seconde face du disque. Dans ce dernier type de frein, les organes de friction peuvent être montés en coulissement sur la partie fixe du véhicule ou sur l'étrier ou le cadre coulissant alors que dans les freins à disque à étrier fixe, l'organe support de couple est nécessairement constitué par l'étrier fixe.

Dans l'un et l'autre de ces types de frein, il est de pratique courante de ménager dans l'organe supportant le couple de freinage une ouverture radiale sensiblement rectangulaire permettant d'assurer le remplacement des organes de friction lorsque les garnitures de friction qui leur sont associées sont usées.

Parmi les différents moyens permettant d'assurer le montage et le démontage des organes de friction, il est connu de disposer une clavette de guidage entre au moins un des bords circonférentiels de l'ouverture ménagée dans l'organe support de couple et les organes de friction. Grâce à une telle disposition, le démontage de la clavette permet l'extraction des organes de friction. Cependant, on a remarqué que le montage de la clavette de guidage effectué par translation de celle-ci après la mise en place des organes de friction est particulièrement délicat et conduit souvent à un coincement de la clavette ayant pour cause le jeu particulièrement faible ou même inexistant entre les organes de friction, la clavette et l'organe support de couple. Cette difficulté de montage de la clavette se trouve accentuée lorsqu'un ressort antibruit est associé aux organes de friction et vient prendre appui sur la clavette après son montage.

Une autre solution (p.e. FR-A-2 288 911) proposée pour permettre d'extraire radialement les organes de friction à travers l'ouverture ménagée dans l'organe support de couple consiste à former dans l'un au moins des bords circonférentiellement espacés de l'ouverture une ou plusieurs encoches permettant l'extraction radiale des organes de friction lorsqu'ils sont amenés en vis-à-vis des encoches. Cependant, les encoches sont nécessairement décalées par rapport à la position occupée normalement par les organes de friction lors du fonctionnement du frein, ce qui a pour conséquence soit de rendre impossible le démontage des organes de friction en présence du disque, soit d'augmenter sensiblement les dimensions axiales du frein. Dans le premier cas, il est nécessaire de démonter au moins partiellement l'organe support de couple pour assurer le remplacement des organes de friction, ce qui n'est évidemment pas souhaitable. Dans le cas où le démontage des organes de friction s'effectue en présence du disque, l'encombrement du frein s'en trouve sensiblement augmenté lorsque l'implantation du frein sur le véhicule le permet. Dans ce cas, il est alors de pratique courante de limiter le décalage des encoches par rapport à la position occupée normalement par les organes de friction à une valeur aussi faible que possible afin de limiter l'encombrement du frein. Cette pratique conduit parfois à un échappement accidentel des organes de friction par les encoches ayant pour conséquence de rendre le frein complètement inutilisable. Dans le cas où l'implantation du frein sur le véhicule interdit toute augmentation de son encombrement, la présence d'encoches permettant l'extraction radiale des organes de friction conduit alors à une diminution de l'efficacité du frein, ce qui va à l'encontre des exigences actuelles concernant l'efficacité du freinage.

L'invention propose une solution permettant de remédier aux inconvénients de chacune des solutions qui viennent d'être décrites tout en conservant leurs avantages.

Dans ce but, l'invention propose un frein à disque comprenant un organe support de couple auquel sont associés des moyens de commande susceptibles de solliciter au moins un organe de friction contre un disque de frein, ledit organe de friction coopérant avec les bords circonférentiellement espacés d'une ouverture ménagée dans l'organe support de couple par l'intermédiaire d'au moins une clavette de guidage, caractérisé en ce que la clavette comporte au moins une encoche permettant l'extraction radiale de l'organe de friction par ladite ouverture lorsque l'organe de friction est disposé en vis-à-vis de ladite encoche, la clavette étant susceptible d'occuper une position de fonctionnement dans laquelle l'encoche est décalée par rapport à l'organe de friction et une position de démontage dans laquelle l'encoche est disposée en vis-à-vis de l'organe de friction.

Conformément à un autre aspect de l'invention, des moyens d'immobilisation sont prévus pour maintenir normalement la clavette dans sa position de fonctionnement.

L'invention vise également une clavette de guidage d'au moins un organe de friction d'un frein à disque, caractérisée en ce qu'elle est prévue pour équiper un frein à disque selon l'invention.

On décrira maintenant à titre d'exemple non limitatif un mode de réalisation particulier de l'invention en se référant aux dessins annexés dans lesquels :

— la figure 1 est une vue de dessus en coupe partielle d'un frein à disque réalisé conformément aux enseignements de la présente invention ;

— la figure 2 est une vue fragmentaire, semblable à la figure 1, dans laquelle la clavette de guidage du frein à disque représenté sur la figure 1 occupe une position permettant le montage et le démontage des organes de friction ;

— la figure 3 est une vue en coupe selon la ligne 3-3 de la figure 1 ;

— la figure 4 est une vue en coupe selon la ligne 4-4 de la figure 2 ;

— la figure 5 est une vue en coupe selon la ligne 5-5 de la figure 2 ; et

— la figure 6 est une vue en plan de la clavette de guidage utilisée dans le frein à disque représenté sur les figures 1 à 5.

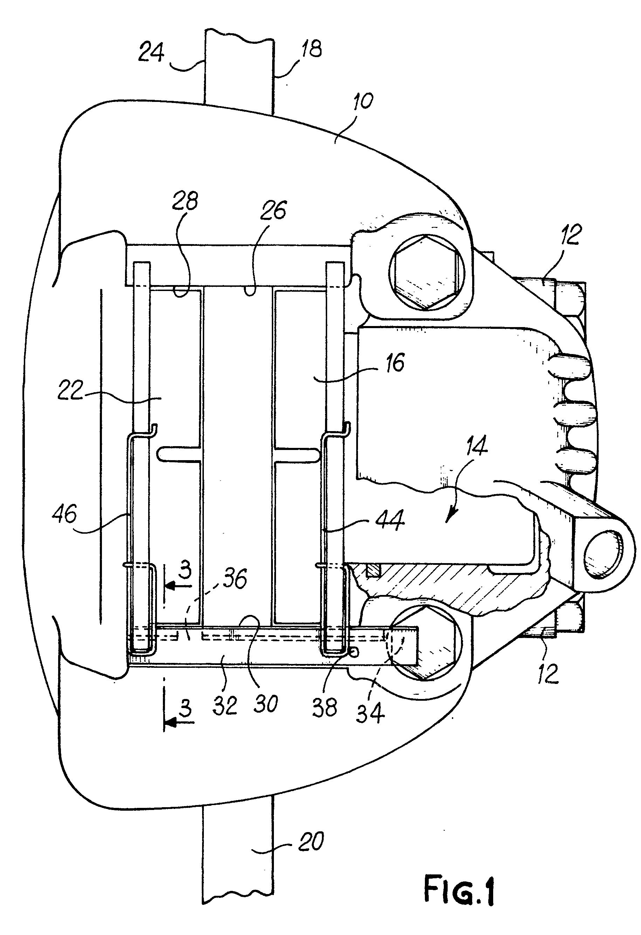

Le frein à disque représenté sur la figure 1 comprend un cadre ou étrier mobile 10 monté coulissant par exemple au moyen de deux colonettes 12 sur un organe support fixe (non représenté). Des moyens de commande, constitués par un moteur de frein hydraulique 14 dans le mode de réalisation représenté, sont associés à l'étrier 10 et disposés de façon à solliciter directement un organe de friction 16 contre une première face 18 d'un disque de frein 20 associé à une roue du véhicule (non représentée). Par réaction, lors de la mise en œuvre du moteur de frein 14, l'étrier 10 sollicite un second organe de friction 22 contre la seconde face 24 du disque 20.

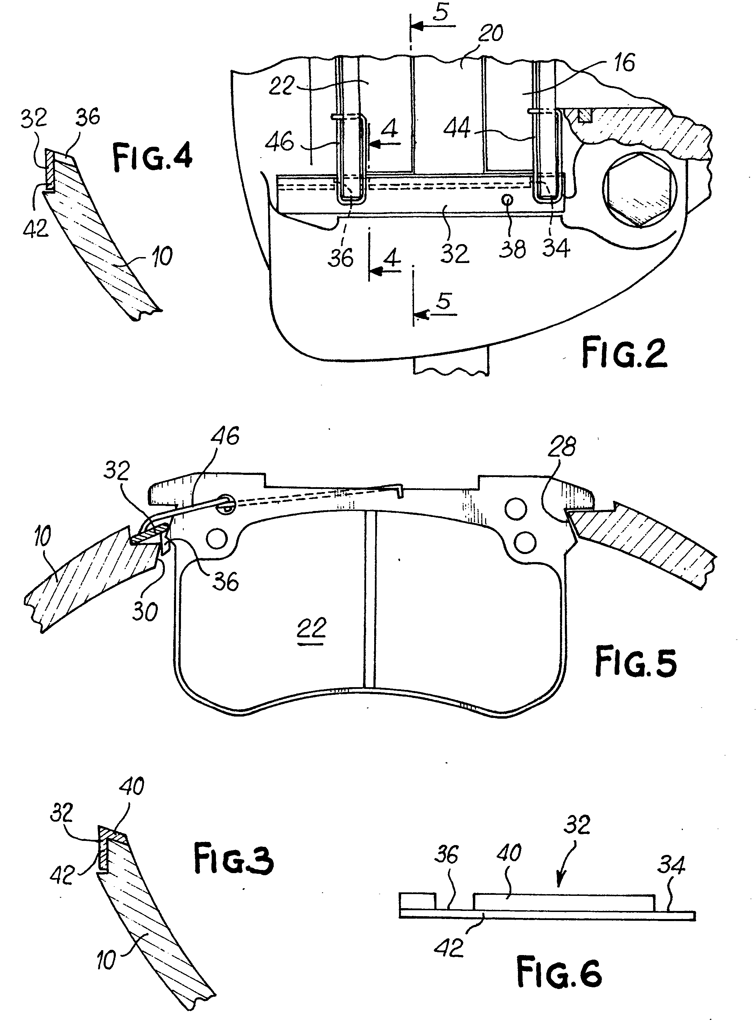

Comme le montrent en particulier les figures 1 et 5, l'étrier 10 est muni dans sa partie chevauchant le disque 20 d'une ouverture radiale sensiblement rectangulaire 26 dont les bords circonférentiellement espacés 28 et 30 supportent les organes de friction 16 et 22, de telle sorte que l'étrier 10 constitue pour ces derniers un organe support de couple. En outre une clavette de guidage 32 est disposée entre les organes de friction 16 et 22 et le bord 30 de l'ouverture 26. On remarquera, comme le montre clairement la figure 5, que les dimensions respectives des organes de friction 16 et 22 et de la clavette 32, ainsi que la distance définie entre les bords 28 et 30 sont tels que les organes de friction 16 et 22 peuvent être extraits radialement au travers de l'ouverture 26 lorsque la clavette 32 n'est pas dans sa position normale de fonctionnement représentée sur la figure 1.

Conformément à l'invention, et comme le montre en particulier la figure 6, la clavette 32 est munie de deux encoches 34 et 36 qui sont respectivement décalées par rapport à la plaque support de garnitures de chacun des organes de friction 16 et 22, par laquelle ces derniers coopèrent avec la clavette 32, lorsque cette dernière occupe sa position normale de fonctionnement représentée sur la figure 1. Plus précisément l'encoche 36 est décalée vers le disque par rapport à la plaque support de garnitures de l'organe de friction 22, et l'encoche 34 est décalée en éloignement du disque par rapport à la plaque support de garnitures de l'organe de friction 16. Le décalage existant entre chacune des encoches 34, 36 et la plaque support de garnitures de l'organe de friction 16, 22 correspondante est sensiblement le même lorsque les garnitures de friction associées à chacune de ces plaques support sont neuves. La clavette 32 comporte en outre un trou 38 susceptible de recevoir une goupille (non représentée) ou analogue de façon à immobiliser la clavette dans sa position normale de fonctionnement représentée sur la figure 1 par coopération de l'extrémité de la goupille avec des moyens de butée (non représentée) associés à l'étrier 10.

Comme le montrent en particulier les figures 3 à 5, la clavette 32 présente en section sensiblement la forme d'un V dont les faces internes coopèrent avec le bord 30 de l'ouverture 26 et dont les faces externes reçoivent en coulissement les organes de friction 16 et 22. L'une 40 des branches du V défini par la clavette 32 s'étend vers l'intérieur du frein alors que l'autre branche 42 est sensiblement perpendiculaire à un plan axial de symétrie du frein passant par l'axe du disque 20 et par l'axe du moteur de frein hydraulique 14. Comme le montre en particulier la figure 5, grâce à cette disposition, les encoches 34 et 36 sont réalisées uniquement dans la branche 40 de la clavette 32. En outre, les deux branches 40 et 42 de la clavette 32 définissent un angle aigu, et les organes de friction 16 et 22 sont de préférence sensiblement symétriques par rapport au plan de symétrie du frein défini précédemment, ce qui signifie que le bord 28 de l'ouverture 26 ainsi que les parties des organes de friction 16 et 22 prenant ancrage sur ce bord sont également en forme de V et définissent un angle sensiblement égal à l'angle défini par les branches 40 et 42 de la clavette 32. Enfin, la clavette 32 est susceptible de coulisser le long du bord 30 de l'ouverture 26 dans une direction sensiblement parallèle à l'axe du disque 20 lorsque les moyens d'immobilisation de la clavette 32 que constitue la goupille (non représentée) traversant le trou 38 sont démontés.

La clavette 32 peut alors être déplacée en translation de sa position normale de fonctionnement représentée sur la figure 1 vers une position de démontage représentée sur les figures 2 et 5 et dans laquelle les plaques support de garnitures des organes de friction 16 et 22 sont disposées en vis-à-vis des encoches 34 et 36 de telle sorte que les organes de friction 16 et 22 peuvent basculer comme le montre la figure 5 sous l'action de ressorts antibruit 44, 46 associés à chacun des organes de friction 16 et 22, respectivement, et venant prendre appui sur la face externe de la branche 42 de la clavette 32. Chacun des organes de friction 16 et 22 peut ainsi être extrait radialement au travers de l'ouverture 26 sans qu'il soit nécessaire de démonter complètement la clavette 32 ou de faire basculer l'étrier 10, et sans augmenter pour autant les dimensions axiales de l'ensemble du frein.

Lorsque les garnitures de friction associés à chacun des organes de friction 16 et 22 sont usées, le remplacement de ces organes s'effectue en effet de la façon suivante :

Avant démontage des organes 16 et 22, les différents éléments constituant le frein sont posés dans les positions dans lesquelles ils sont représentés sur la figure 1. Lorsqu'un tel démontage est souhaité, la goupille (non représentée) traversant le trou 38 et venant en butée contre l'étrier 10 pour immobiliser la clavette 32 par rapport à ce dernier est démontée. La clavette 32 peut alors être sollicitée en translation vers la gauche en considérant la figure 1 jusqu'à la position représentée sur la figure 2. Dans cette position de démontage, les plaques support de garnitures de chacun des organes de friction 16 et 22 sont disposées en vis-à-vis de chacune des encoches 34 et 36, de telle sorte que les ressorts 44 et 46 font basculer les organes de friction 16 et 22 autour du bord 28 de l'ouverture 26 comme le montre la figure 5. Dans cette position, il est clair que les organes de friction peuvent être démontés sans peine au travers de l'ouverture 26 et remplacés par des organes de friction dont les garnitures sont neuves. Le montage des organes de friction équipés de garnitures neuves s'effectue radialement par les encoches 34 et 36 formées dans la clavette 32, après que celle-ci ait été disposée dans sa position de démontage représentée sur la figure 2. Les ressorts 44 et 46 maintiennent alors les organes de friction 16 et 22 et la clavette 32 dans la position représentée sur la figure 5. Une force radiale dirigée vers l'intérieur du frein est alors exercée à l'extrémité gauche des organes de friction en considérant la figure 5 de façon à comprimer les ressorts 44 et 46. Simultanément, la clavette 32 qui occupe alors sa position de démontage représentée sur la figure 2, est sollicitée vers la droite en considérant les figures 1 et 2 jusqu'à sa position normale de fonctionnement représentée sur la figure 1. La goupille (non représentée) est ensuite remise en place dans le trou 38 de façon à immobiliser la clavette 32 dans cette position.

On comprendra que l'invention n'est pas limitée à un frein du type décrit et peut également s'appliquer à un frein du type dit à étrier fixe dans lequel l'étrier est directement associé à une partie fixe du véhicule et comporte des moyens de commande opposés agissant directement sur chacun des organes de friction, ainsi qu'à un frein à disque du type à étrier ou à cadre coulissant dans lequel les organes de friction seraient montés dans une ouverture formée dans une partie fixe du véhicule portant ledit étrier. Conformément à l'invention, une clavette pourrait également être disposée entre les organes de friction et chacun des bords opposés de l'ouverture.

## Revendications

1. Frein à disque comprenant un organe support de couple (10) auquel sont associés des moyens de commande (16) susceptibles de solliciter au moins un organe de friction (16, 22) contre un disque de frein (20), ledit organe de friction coopérant avec les bords (28, 30) circonférentiellement espacés d'une ouverture (26) ménagée dans l'organe support de couple (10) par l'intermédiaire d'au moins une clavette de guidage (32), caractérisé en ce que la clavette (32) comporte au moins une encoche (34, 36) permettant l'extraction radiale de l'organe de friction (16, 22) par ladite ouverture (26) lorsque l'organe de friction est disposé en vis-à-vis de ladite encoche, la clavette étant susceptible d'occuper une position de fonctionnement dans laquelle l'encoche est décalée par rapport à l'organe de friction et une position de démontage dans laquelle l'encoche est disposée en vis-à-vis de l'organe de friction.

2. Frein à disque selon la revendication 1, caractérisé en ce que des moyens d'immobilisation sont prévus pour maintenir normalement la clavette dans sa position de fonctionnement.

3. Frein à disque selon la revendication 2, caractérisé en ce que les moyens d'immobilisation comprennent au moins une goupille traversant un trou (38) formé dans la clavette (32) et coopérant avec des moyens de butée associés à l'organe support de couple (10).

4. Frein à disque selon l'une quelconque des revendications précédentes, caractérisé en ce que la clavette est susceptible de coulisser le long du bord correspondant (30) de ladite ouverture (26) dans une direction sensiblement parallèle à l'axe du disque pour occuper l'une ou l'autre desdites positions.

5. Frein à disque selon l'une quelconque des revendications précédentes, caractérisé en ce que la clavette présente en section la forme d'un V dont les faces internes coopèrent avec le bord correspondant de ladite ouverture et dont les faces externes reçoivent en coulissement ledit organe de friction, l'une (40) des branches du V défini par la clavette s'étendant vers l'intérieur du frein alors que l'autre branche (42) est sensiblement perpendiculaire à un plan axial de symétrie du frein, ladite encoche (34, 36) étant ménagée dans la branche (40) s'étendant vers l'intérieur du frein.

6. Frein à disque selon la revendication 5, caractérisé en ce que les deux branches du V défini par la clavette forment un angle aigu.

7. Frein à disque selon l'une quelconque des revendications 5 ou 6, caractérisé en ce qu'au moins un ressort antibruit (44, 46) est associé audit organe de friction (16, 22) et vient prendre appui sur la face externe de la branche (42) de la clavette perpendiculaire audit plan axial.

8. Frein à disque selon l'une quelconque des revendications précédentes, dans lequel un second organe de friction coopère avec les bords circonférentiellement espacés de ladite ouverture, caractérisé en ce qu'une seconde encoche est ménagée dans la clavette pour permettre l'extraction radiale du second organe de friction.

9. Frein à disque selon la revendication 8, caractérisé en ce que la première et la seconde encoche sont décalées dans la même direction et sur une distance sensiblement égale par rapport aux organes de friction correspondants lorsque les garnitures de friction associées à ces derniers sont neuves et lorsque la clavette occupe sa position de fonctionnement.

10. Frein à disque selon la revendication 9, dans lequel l'organe support de couple est constitué par un étrier ou un cadre chevauchant le disque et monté en coulissement parallèlement à l'axe du disque sur une partie non tournante, les moyens de commande (14) étant disposés d'un côté du disque et agissant directement sur le premier organe de friction (16) et, par réaction au travers de l'étrier (10) sur le second organe de friction (22), caractérisé en ce que la première encoche (34) est décalée en éloignement du disque par rapport au premier organe de friction (16) et en ce que la seconde encoche (36) est décalée vers le disque par rapport au second organe de friction (22) lorsque la clavette occupe sa position de fonctionnement.

11. Clavette de guidage d'au moins un organe de friction d'un frein à disque, caractérisée en ce qu'elle est prévue pour équiper un frein à disque selon l'une quelconque des revendications précédentes.

**Claims**

1. A disc brake comprising a torque-absorbing member (10) associated with operating means (16) capable of urging at least one friction member (16, 22) on to a brake disc (20), the friction member cooperating with the circumferentially spaced edges (28, 30) of an aperture (26) formed in the torque-absorbing member (10) by way of at least one guide key (32), characterized in that the key (32) comprises at least one recess (34, 36) permitting radial extraction of the friction member (16, 22) through the aperture (26) when the friction member is situated opposite the recess, the key being capable of occupying an operative position, in which the recess is offset relative to the friction member, and a removal position, in which the recess is situated opposite the friction member.

2. A disc brake as claimed in claim 1, characterized in that locking means are provided to normally hold the key in its operative position.

3. A disc brake as claimed in claim 2, characterized in that the locking means comprise at least one pin passing through a hole (38) in the key and cooperating with abutment means associated with the torque-absorbing member (10).

4. A disc brake as claimed in any of the preceding claims, characterized in that the key is capable of sliding along the corresponding edge (30) of the aperture (26) in a direction substantially parallel to the disc axis in order to occupy one or other of the said position.

5. A disc brake as claimed in any of the preceding claims, characterized in that the cross-section of the key forms a V of which the inside faces cooperate with the corresponding edge of the aperture and the outside faces slidably receive the friction member, one (40) arm of the V defined by the key extending towards the brake interior whereas the other arm (42) is substantially perpendicular to an axial plane of symmetry of the brake, the recess (34, 36) being formed in the arm (40) extending towards the brake interior.

6. A disc brake as claimed in claim 5, characterized in that the two arms of the V defined by the key form an acute angle.

7. A disc brake as claimed in claim 5 or 6, characterized in that at least one noise-reducing spring (44, 46) is associated with the friction member (16, 22) and comes to bear on the outside face of the key arm (42) perpendicular to the axial plane.

8. A disc brake as claimed in any of the preceding claims, in which a second friction member cooperates with the circumferentially spaced edges of the aperture, characterized in that a second recess is provided in the key to permit radial extraction of the second friction member.

9. A disc brake as claimed in claim 8, characterized in that the first and second recesses are offset in the same direction and by substantially equal distances relative to the corresponding friction members when the friction linings of the latter are new and when the key is in its operative position.

10. A disc brake as claimed in claim 9, in which the torque-absorbing member comprises a caliper or frame straddling the disc and slidable parallel to the disc axis on a non-rotating part, the operating means (14) being situated on one side of the disc and acting on the first friction member (16) directly and on the second friction member (22) by reaction by way of the caliper (10), characterized in that the first recess (34) is offset away from the disc relative to the first friction member (16) and the second recess (36) is offset towards the disc relative to the second friction member (22) when the key is in its operative position.

11. A guide key for at least one friction member for a disc brake, characterized in that it is designed for a disc brake as claimed in any of the preceding claims.

**Ansprüche**

1. Scheibenbremse mit einem Drehmoment-absorbierenden Element, dem Betätigungseinrichtungen zugeordnet sind, die in der Lage sind, mindestens ein Reibelement in Anlage an eine Bremsscheibe zu pressen, wobei das Reibelement über mindestens einen Führungskeil mit den in Umfangsrichtung einen Abstand voneinander aufweisenden Kanten einer im drehmoment-absorbierenden Element ausgebildeten Öffnung zusammenwirkt, dadurch gekennzeichnet, daß der Keil (32) mindestens eine Ausnehmung (34, 36) aufweist, die ein radiales Herausziehen des Reibelementes (16, 22) durch die Öffnung (26) gestattet, wenn das Reibelement gegenüber der Ausnehmung angeordnet ist, und daß der Keil (32) in der Lage ist, eine Betriebsstellung einzunehmen, in der die Ausnehmung (34, 36) gegenüber dem Reibelement (16, 22) versetzt angeordnet ist, und eine Entfernungsstellung, in der die Ausnehmung gegenüber dem Reibelement angeordnet ist.

2. Scheibenbremse nach Anspruch 1, dadurch gekennzeichnet, daß Verriegelungseinrichtungen vorgesehen sind, um den Keil (32) normalerweise in seiner Betriebsstellung zu halten.

3. Scheibenbremse nach Anspruch 2, dadurch gekennzeichnet, daß die Verriegelungseinrichtungen mindestens einen Stift umfassen, der sich durch ein Loch (38) im Keil (32) erstreckt und mit Widerlagereinrichtungen zusammenwirkt, die dem Drehmoment-absorbierenden Element (10) zugeordnet sind.

4. Scheibenbremse nach einem der vorangehenden Ansprüche, dadurch gekennzeichnet, daß der Keil (32) in der Lage ist, entlang der entsprechenden Kante (30) der Öffnung (26) in einer Richtung zu gleiten, die im wesentlichen parallel zur Scheibenachse verläuft, um die eine oder die andere der Stellungen einzunehmen.

5. Scheibenbremse nach einem der vorangehenden Ansprüche, dadurch gekennzeichnet, daß der Keil (32) in Querschnitt V-förmig ausgebildet ist, wobei die Innenseiten des Vs mit der entsprechenden Öffnungskante zusammenwirken und die Außenseiten das Reibelement (16, 22) gleitend aufnehmen, und daß sich ein Arm (40) des von dem Keil gebildeten Vs in Richtung auf das Bremseninnere erstreckt, während der andere Arm (42) im wesentlichen senkrecht zu einer axialen Symmetrieebene der Bremse verläuft, wobei die Ausnehmung (34, 36) in demjenigen Arm (40) ausgebildet ist, der sich in Richtung auf das Bremseninnere erstreckt.

6. Scheibenbremse nach Anspruch 5, dadurch gekennzeichnet, daß die beiden Arme des von dem Keil (32) gebildeten Vs miteinander einen schiefen Winkel bilden.

7. Scheibenbremse nach einem der Ansprüche 5 oder 6, dadurch gekennzeichnet, daß dem Reibelement (16, 22) mindestens eine geräuschdämpfende Feder (44, 46) zugeordnet ist, die auf der Außenseite desjenigen Keilarmes (42) zu lagern kommt, der sich senkrecht zu der axialen Ebene erstreckt.

8. Scheibenbremse nach einem der vorangehenden Ansprüche, bei der ein zweites Reibelement mit den in Umfangsrichtung einen Abstand voneinander aufweisenden Kanten der Öffnung zusammenwirkt, dadurch gekennzeichnet, daß in dem Keil (32) eine zweite Ausnehmung vorgesehen ist, die ein radiales Herausziehen des zweiten Reibelementes ermöglicht.

9. Scheibenbremse nach Anspruch 8, dadurch gekennzeichnet, daß die erste und zweite Ausnehmung (34, 36) gegenüber den entsprechenden Reibelementen in der gleichen Richtung und um im wesentlichen die gleichen Strecken versetzt angeordnet sind, wenn die Reibbeläge der Reibelement neu sind und wenn sich der Keil in seiner Betriebsstellung befindet.

10. Scheibenbremse nach Anspruch 9, bei der das Drehmonentabsorbierende Element einen Bremssattel oder Rahmen umfaßt, der die Scheibe umgreift und auf einem nicht drehbaren Teil parallel zur Scheibenachse gleiten kann und bei der die Betätigungseinrichtungen auf einer Seite der Scheibe angeordnet sind und auf das erste Reibelement unmittelbar und auf das zweite Reibelement durch Reaktion über den Bremssattel einwirken, dadurch gekennzeichnet, daß die erste Ausnehmung (34) gegenüber dem ersten Reibelement (16) von der Scheibe weg versetzt angeordnet ist und daß die zweite Ausnehmung (36) gegenüber dem zweiten Reibelement (22) in Richtung auf die Scheibe versetzt angeordnet ist, wenn sich der Keil in seiner Betriebsstellung befindet.

11. Führungskeil für mindestens ein Reibelement für eine Scheibenbremse, dadurch gekennzeichnet, daß er für eine in einem der vorstehenden Ansprüche beanspruchte Scheibenbremse ausgebildet ist.

FIG.1

FIG.4

FIG.2

FIG.5

FIG.3

FIG.6